# EUROPÄISCHE PATENTSCHRIFT

(11) **EP 2 499 203 B1**
(45) Veröffentlichungstag und Bekanntmachung des Hinweises auf die Patenterteilung: **12.02.2014**
(21) Anmeldenummer: 10773928.6
(22) Anmeldetag: 10.11.2010
(51) Int. Cl.: C09C 1/30, C08K 9/06

(54) **KOMPOSITPARTIKEL MIT ORGANISCHEN UND ANORGANISCHEN DOMÄNEN**
COMPOSITE PARTICLE HAVING ORGANIC AND INORGANIC DOMAINS
PARTICULES COMPOSITES À DOMAINES ORGANIQUES ET INORGANIQUES

(30) Priorität: 12.11.2009 DE 102009046664
(43) Veröffentlichungstag der Anmeldung: 19.09.2012
(73) Patentinhaber: Wacker Chemie AG, 81737 München (DE)
(72) Erfinder: HASHEMZADEH, Abdulmajid, 84508 Burgkirchen (DE)
(74) Vertreter: Ege, Markus
(86) Internationale Anmeldenummer: PCT/EP2010/067197
(87) Internationale Veröffentlichungsnummer: WO 2011/058051

(56) Entgegenhaltungen:
- US-A- 4 421 660
- US-A1- 2008 021 147

## Beschreibung

Gegenstand der vorliegenden Erfindung sind Kompositpartikelauf Basis von anorganischen Oxiden, Organopolymeren und Kupplungsreagenzien, Verfahren zur Herstellung der Kompositpartikel sowie deren Verwendung beispielsweise als Additiv, Bindemittel oder Cobindemittel.

Kompositpartikel enthalten organische und anorganische Einheiten bzw. Domänen, wie beispielsweise organische Polymereinheiten und daran fixierte Partikel anorganischer Oxide, und haben üblicherweise Durchmesser von 4 bis 5000 nm.

In gängigen Verfahren zur Herstellung von Kompositpartikeln werden organische Monomere mittels Emulsionspolymerisation in wässrigen Dispersionen von anorganischen Partikeln polymerisiert, wobei organische Domänen auf der Oberfläche der anorganischen Partikel verankert werden sollen, wie beispielsweise beschrieben in Dong-Ming Qi, J. of Applied Polym. Sci., 2006, Vol. 99, Seiten 3425 bis 3432; Dong-ming Qi, Colloid Polymer Sci. 2008, Vol. 286, Seiten 233 bis 241; Tsutomu Mizutani, J. of Applied Polym. Sci., 2006, Vol. 99, Seiten 659 bis 669; Frank Bauer, Macromol. Mater. Eng., 2006291, Seiten 493 bis 498 oder aus der DE-A 10 2004 010 155, US 3,544,500, US 4,421,660, WO-A 2006/072464, DE-A 10129537, WO-A 01/18081, die US 6833401, DE-A 19942777, EP-1431356 oder WO-A 2008/009596. Bekannt ist auch die radikalisch initiierte Polymerisation von ethylenisch ungesättigten, silanhaltigen Monomeren in Gegenwart von Polyvinylalkoholen, wie beispielsweise in der WO-A 2007/057382 beschrieben. Aus der DE-A 102007038333 sind Zusammensetzungen bekannt, die durch Kondensation von Siliciumverbindungen in Gegenwart von Polyvinylalkoholen hergestellt wurden, wobei die dabei entstandenen anorganischen Partikel ausdrücklich nicht auf den Polyvinylalkoholen fixiert wurden, sondern neben den Polyvinylalkoholen in Form einer Abmischung vorlagen, was zu einer hohen Wasserlöslichkeit der Zusammensetzung führt.

Die Fixierung der organischen und der anorganischen Domänen der Kompositpartikel sowie die Bereitstellung stabiler Dispersionen von Kompositpartikeln bereiten Probleme. Denn die anorganischen bzw. organischen Bestandteile haben für gewöhnlich unterschiedliche Polaritäten und neigen dazu, sich voneinander zu separieren bzw. sich jeweils untereinander zu agglomerieren. Tritt eine derartige Agglomeration vor oder während der Herstellung der Kompositpartikel auf, so werden beispielsweise die agglomerierten anorganischen Partikel von den organischen Bestandteilen eingekapselt, so dass keine gleichmäßige Fixierung anorganischer Partikel auf den organischen Bestandteilen stattfindet und somit letztlich keine chemisch einheitlich aus organischen und anorganischen Domänen aufgebauten Kompositpartikel entstehen. Entsprechende Mischungen liegen in Lösungsmitteln nicht als kolloidale Primärteilchen vor. Es kann sogar vorkommen, dass die anorganischen Partikel und die organischen Bestandteile als Abmischung nebeneinander vorliegen.

Aber auch in Kompositpartikeln, die einheitlich aus anorganischen und organischen Domänen aufgebaut sind, kann es zu einer Agglomeration der anorganischen bzw. organischen Domänen kommen, was zu einer unzureichenden Lagerstabilität insbesondere von gelösten, emulgierten oder dispergierten Kompositpartikeln führt und sich durch Gelierung oder Stippenbildung äußert. Insbesondere bei höheren Temperaturen, beispielsweise ab 40°C, tritt eine derartige Agglomeration auf. Ebenso neigen wässrige Dispersionen von ausschließlich aus anorganischen Bausteinen aufgebaute Partikeln, wie beispielsweise kolloides Silica oder Organopolysiloxane, bei höheren Temperaturen, beispielsweise bei 70°C, oder sogar schon bei Raumtemperatur zur Agglomeration.

Agglomerierte Kompositpartikel haben nicht mehr die gewünschten anwendungstechnischen Eigenschaften oder sind sogar gänzlich unbrauchbar. Um beispielsweise stabile wässrige Dispersionen von Kompositpartikeln bereitzustellen, werden üblicherweise Emulgatoren, Schutzkolloide oder spezielle Additive als Stabilisatoren zugesetzt, wie beispielsweise die in der DE-A 10 2004 010 155 empfohlenen hydroxygruppenhaltigen Alkylamino-Verbindungen.

Die WO-A 2008/040464 empfiehlt für Putze oder Farben den Einsatz von kolloidalem Siliciumdioxid und Polymerdispersionen auf Basis von Vinylestern oder (Meth)acrylsäureestern, ethylenisch ungesättigten Carbonsäuren sowie ethylenisch ungesättigten, emulgierend wirkenden Monomeren. Derartige Systeme erreichen aber nicht die in vielen Anwendungen geforderte Wasserbeständigkeit. Aus der EP-A 1043372 sind Beschichtungsmittel für Papier bekannt, die kolloidale Silikapartikel sowie Copolymere mit erheblichen Anteilen an Carbonsäuregruppen tragenden Monomer-Einheiten enthalten. Auf Grund der Zusammensetzung der Copolymere bzw. Beschichtungsmittel sind entsprechende Beschichtungen alkalilöslich und damit recyclebar. In vielen Anwendungen ist aber auch eine Wasserbeständigkeit unter alkalischen Bedingungen gefordert. Weiterhin sind Copolymere mit hohen Gehalten an Carbonsäuregruppen tragenden Monomer-Einheiten hochviskos, was bei Anwendungen Schwierigkeiten bereiten und ein Arbeiten in Verdünnungen, d.h. bei niedrigen Feststoffgehalten erforderlich machen kann. Die EP-A 1243619 offenbart Kompositmaterialien bestehend aus organischen Domänen, wie Polyacrylsäure, und anorganischen Domänen, beispielsweise Natriumsilikate oder kolloidale Kieselsäuren, wobei die organischen und anorganischen Domänen durch ionische Wechselwirkungen mit zweiwertigen Metallkationen verknüpft sind, so dass die Kompositmaterialien als Aggregate der polymeren Domänen in Form von Gelen vorliegen.

Aufgabe der vorliegenden Erfindung war es, Kompositpartikel bereitzustellen, die die oben genannten Nachteile nicht aufweisen, und die insbesondere auch in Form von Dispersionen lagerstabil sind, idealerweise auch ohne Einsatz von Stabilisatoren.

Die Aufgabe wurde überraschenderweise mit Kompositpartikeln gelöst, in denen Oxid-Partikel und Carbonsäuregruppen tragende Organopolymere mittels Alkoxysilan-Gruppen enthaltenden Kupplungsreagenzien verknüpft sind, wobei Organopolymere mit größeren Gehalten an Carbonsäuregruppen tragenden Einheiten zusätzlich Einheiten von mehrfach ethylenisch ungesättigten Monomeren enthalten.

Gegenstand der Erfindung sind Kompositpartikel erhältlich durch Umsetzung von a) einem oder mehreren anorganischen Oxiden (Oxid-Partikel) mit einem mittleren Durchmesser von < 1000 nm, b) einem oder mehreren Organopolymeren und c) einem oder mehreren Kupplungsreagenzien, wobei Oxid-Partikel a) und Organopolymere b) über Einheiten von Kupplungsreagenzien c) verknüpft werden, dadurch gekennzeichnet, dass als Organopolymere b) ein oder mehrere Polymerisate von
α) einem oder mehreren ethylenisch ungesättigten Monomeren ausgewählt aus der Gruppe umfassend Vinylester von Carbonsäuren mit 1 bis 15 C-Atomen, Methacrylsäureester oder Acrylsäureester von Carbonsäuren mit unverzweigten oder verzweigten Alkoholen mit 1 bis 15 C-Atomen und Olefine, Vinylaromaten und Vinylhalogenide, und
β) einer oder mehreren ethylenisch ungesättigten Carbonsäuren mit 3 bis 11 C-Atomen, und gegebenenfalls
γ) einem oder mehreren Monomeren enthaltend mindestens zwei ethylenisch ungesättigte Gruppen und gegebenenfalls
δ) einem oder mehreren weiteren ethylenisch ungesättigten Monomeren eingesetzt werden,
mit den Maßgaben, dass die Organopolymere b) mindestens 91 Gew.-% an Einheiten der Monomere α) und β) enthalten, und dass die Organopolymere b) Einheiten von einem oder mehreren Monomeren γ) enthalten, sofern die Organopolymere b) mehr als 4,9 Gew.-% an Einheiten der ethylenisch ungesättigten Carbonsäuren β) enthalten,
wobei sich die Angaben in Gew.-% jeweils auf das Gesamtgewicht der Organopolymere b) beziehen, und
die Kupplungsreagenzien c) ausgewählt werden aus der Gruppe umfassend
c1) ein oder mehrere Alkylalkoxysilane, deren Alkylgruppen mindestens eine Amino-, Epoxy-, Merkapto- oder IsocyanatGruppe aufweisen, und
c2) ein oder mehrere ungesättigte Alkoxysilane und zudem ein oder mehrere ethylenisch ungesättigte Organomonomere enthaltend mindestens eine funktionelle Gruppe ausgewählt aus der Gruppe umfassend Carbonsäuregruppen oder deren Derivate, Sulfonsäure-, Epoxy- und Hydroxy-Gruppen.

In den Kompositpartikeln sind die Oxid-Partikel a) und die Organopolymere b) im Wesentlichen über Einheiten der Kupplungsreagenzien c) über kovalente Bindungen verknüpft.

Bei den Oxid-Partikeln a) handelt es sich beispielsweise um Metalloxide oder Halbmetalloxide, die gegebenenfalls organische Gruppen enthalten können.

Als Halbmetalloxide sind Siliciumoxide bevorzugt. Bei den Metalloxiden sind die Oxide der Metalle Aluminium, Titan, Zirkonium, Tantal, Wolfram, Hafnium, Zink und Zinn bevorzugt. Bei den Siliciumoxiden werden kolloidale Kieselsäure, pyrogene Kieselsäure, gefällte Kieselsäure, Kieselsole, Silicate oder auch Organopolysiloxane bevorzugt. Bei den Metalloxiden sind Aluminiumoxide wie Korund, Aluminiummischoxide mit anderen Metallen und/oder Silicium, Titanoxide, Zirkonoxide, Eisenoxide besonders bevorzugt.

Die Siliciumoxide bestehen besonders bevorzugt aus Einheiten der allgemeinen Formel

R¹ₓSi(OR²)_{y}O_{(4-x-y)/2} (I),

worin
x 0, 1, 2 oder 3 und y 0, 1 oder 2 ist,
mit der Maßgabe, dass die Summe x+y≤3 ist,
R¹ einen SiC-gebundenen einwertigen Kohlenwasserstoffrest mit 1 bis 18 Kohlenstoffatomen,
R² ein Wasserstoffatom oder einen Kohlenwasserstoffrest mit 1 bis 18 Kohlenstoffatom, der durch ein oder mehrere voneinander separate Sauerstoffatome unterbrochen sein kann, oder einen Rest der Formel -COCH₃, -COC₂H₅ oder -CH₂CH₂OH bedeutet, wobei die einzelnen R¹, R² sowie x und y ihre Bedeutung jeweils unabhängig voneinander annehmen.

Beispiele für Kohlenwasserstoffreste R¹ sind Alkylreste, wie der Methyl-, Ethyl-, n-Propyl-, Isopropyl-, n-Butyl-, sec.-Butyl-, Amyl-, Hexyl-, ß-Ethylhexyl-, Heptyl-, Octyl-, isoOctyl- und Octadecylrest; Alkenylreste, wie der Vinyl- und Allylrest und Butenylreste; Alkinylreste; Cycloalkylreste, wie der Cyclobutyl- und Cyclohexylrest und Methylcyclohexylreste; Arylreste, wie der Phenylrest; Alkarylreste, wie Tolylreste; und Aralkylreste, wie der Benzylrest. Besonders bevorzugt sind der Methyl-, Ethyl-, Vinyl- und Phenylrest.

Beispiele für substituierte Kohlenwasserstoffreste R¹ sind halogenierte Kohlenwasserstoffreste, wie Chlormethyl-, 3-Chlorpropyl-, 3-Brompropyl-, 3,3,3-Trifluorpropyl- und 5,5,5,4,4,3, 3-Heptafluorpentylrest, sowie der Chlorphenyl-, Dichlorphenyl- und Trifluortolylrest; Mercaptoalkylreste, wie der 2-Mercaptoethyl- und 3-Mercaptopropylrest; Cyanoalkylreste, wie der 2-Cyanoethyl- und 3-Cyanopropylrest; Aminoalkylreste, wie der 3-Aminopropyl-, N-(2-Aminoethyl)-3-aminopropyl- und N-(2-Aminoethyl)-3-amino(2-methyl)propylrest; Aminoarylreste, wie der Aminophenylrest; Acyloxyalkylreste, wie der 3-Acryloxypropyl- und 3-Methacryloxypropylrest; Hydroxyalkylreste, wie der Hydroxypropylrest; und Reste der Formel HOCH₂CH(OH)CH₂SCH₂CH₂-, HOCH₂CH₂OCH₂-; oder Glycidylether, insbesondere Propylglycidylaether.

Vorzugsweise ist R² ein Wasserstoffatom oder gleiche oder verschiedene Alkyl- oder Alkoxyalkylenreste mit 1 bis 4 Kohlenstoffatom(en) je Rest. Beispiele für Kohlenwasserstoffreste R² sind Alkylreste, wie der Methyl-, Ethyl-, n-Propyl-, Isopropyl-, n-Butyl-, sec.- Butyl- und tert.- Butylrest; und Alkoxyalkylenreste, wie der Methoxyethylen- und Ethoxyethylenrest. Besonders bevorzugt sind der Methyl- und Ethylrest.

Vorzugsweise ist in der Formel I x durchschnittlich 0,1 bis 2,0 und y durchschnittlich 0 bis 0,5.

Die Partikelgröße der Oxid-Partikel a) beträgt vorzugsweise von 2 nm bis 500 nm, besonders bevorzugt 5 nm bis 100 nm und am meisten bevorzugt 10 nm bis 70 nm (bestimmt mittels Transmissionselektronenmikroskopie; mit dem Gerät Libra 120 der Firma Zeiss).

Die Oxid-Partikel a) können in monomodaler Form, d.h. als Mischung von Teilchen mit einheitlicher Teilchengröße, in bimodaler Form, d.h. als Mischung von Teilchen deren Teilchengrößenverteilung zwei Maxima aufweist, oder in polymodaler Form, d.h. als Mischung von Teilchen, die keine mono- oder bimodale Teilchengrößenverteilung aufweisen, vorliegen.

Zur Herstellung der Kompositpartikel werden die Oxid-Partikel a) vorzugsweise zu 9 bis 80 Gew.-%, besonders bevorzugt 20 bis 60 Gew.-% und am meisten bevorzugt 30 bis 50 Gew.-% eingesetzt, jeweils bezogen auf die Gesamtmasse der Komponenten a), b) und c) zur Herstellung der Kompositpartikel.

Die Oxid-Partikel a) sind handelsübliche Produkte oder nach gängigen Methoden herstellbar, wie beispielsweise in US 3,433,780, US 4,857,582, US 5,281,657 in Noll, Chemie und Technologie der Silikone, 2. Auflage 1968, Weinheim, oder in Houben-Weyl, Methoden der organischen Chemie, Band E20, Georg Thieme Verlag, Stuttgart (1987) beschrieben. Oxid-Partikel a) in Form von kolloidalen wässrigen Dispersionen werden beispielsweise erhalten, indem Organosiliciumverbindungen, wie Silane der Formel R¹ₓSi(OR²)₄₋ₓ, worin x, R¹ und R² die oben dafür angegebene Bedeutung haben, und/oder deren Teilhydrolysate hydrolisiert werden.

Zur Herstellung der Organopolymere b) werden vorzugsweise Vinylester von Carbonsäuren mit 1 bis 12 C-Atomen, besonders bevorzugt Vinylester von Carbonsäuren mit 1 bis 8 C-Atomen und am meisten bevorzugt Vinylester von Carbonsäuren mit 1 bis 6 C-Atomen eingesetzt. Beispiele für geeignete Vinylester sind Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit 5 bis 13 C-Atomen, beispielsweise VeoVa9R oder VeoVa10R (Handelsnamen der Firma Shell). Bevorzugt ist Vinylacetat.

Methacrylsäureester oder Acrylsäureester sind vorzugsweise Ester von unverzweigten oder verzweigten Alkoholen mit 1 bis 12 C-Atomen, besonders bevorzugt 1 bis 8 C-Atomen und am meisten bevorzugt 1 bis 5 C-Atomen. Beispiele für bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Besonders bevorzugt sind Methylacrylat, Methylmethacrylat, n-Butylacrylat und 2-Ethylhexylacrylat.

Die Olefine, Vinylaromaten und die Vinylhalogenide haben vorzugsweise 1 bis 12 C-Atome und besonders bevorzugt 1 bis 9 C-Atome und am meisten bevorzugt 1 bis 8 C-Atome. Bevorzugte Olefine sind Ethylen und Propylen. Bevorzugte Vinylaromaten sind Styrol und Vinyltoluol. Ein bevorzugtes Vinylhalogenid ist Vinylchlorid.

Die Monomere α) weisen vorzugsweise keine hydrophilen Gruppen auf. Hydrophile Gruppen können nichtionisch sein, wie Polyglykolgruppen, oder anionisch, wie Sulfat-, Sulfonat-, Phosphat- oder Phosphonatgruppen, oder kationisch, wie Ammonium-Gruppen.

Die ethylenisch ungesättigten Carbonsäuren β) haben vorzugsweise 3 bis 9 C-Atome, besonders bevorzugt 3 bis 8 C-Atome und am meisten bevorzugt 3 bis 6 C-Atome. Als Monomere β) sind beispielsweise ethylenisch ungesättigte Mono- oder Dicarbonsäuren bevorzugt, wie Acrylsäure, Methacrylsäure, Crotonsäure, Itaconsäure, Fumarsäure oder Maleinsäure, Monoester der Fumarsäure oder Maleinsäure, wie die Monoethyl- und Monoisopropylester. Besonders bevorzugte Monomere β) sind ethylenisch ungesättigte Monocarbonsäuren, wie Methacrylsäure, Acrylsäure oder Crotonsäure. Am meisten bevorzugt sind Methacrylsäure und Crotonsäure.

Die Monomere γ) haben vorzugsweise 2 bis 10 ethylenisch ungesättigte Gruppen und besonders bevorzugt zwei bis 4 ethylenisch ungesättigte Gruppen. Geeignete Monomere γ) sind beispielsweise Divinyl-Verbindungen, Di(meth)acrylate, Tri(meth)-acrylate, Tetra(meth)acrylate, Diallyl-Verbindungen, Triallyl-Verbindungen und Tetraallyl-Verbindungen. Bevorzugt sind Divinylbenzol, Divinyladipat, Ethyleneglycoldi(meth)acrylate, Diethylenglycoldi(meth)acrylat, Triethylenglycoldi(meth)acrylat, Polyethylenglycoldi(meth)acrylat, Polypropyleneglycoldi(meth)-acrylat, Neopentylglycoldi(meth)acrylat, 1,3-Butylenglycoldi-(meth)acrylat, 1,3-Butyldi(meth)acrylat, Hexandioldi(meth)-acrylat, 1,3-Butandioldi(meth)acrylat, Trimethylolethantri-(meth)acrylat, Trimethylolpropantri(meth)acrylat, Dipentaerythritoltri(meth)acrylat, Diallylphthalat, Triallyldicyanurat und Tetraallyloxyethan. Besonders bevorzugt sind Trimethylolethantri(meth)acrylat, Hexandioldi(meth)acrylat und 1,3-Butandioldi(meth)acrylat.

Zur Herstellung der Organopolymere b) werden vorzugsweise 65 bis 98 Gew.-%, besonders bevorzugt 85 bis 97 Gew.-% und am meisten bevorzugt 90 bis 97 Gew.-% Monomere α) eingesetzt, jeweils bezogen auf das Gesamtgewicht der Monomere zur Herstellung der Organopolymere b). Als Monomere α) werden vorzugsweise 50 bis 100 Gew.-%, besonders bevorzugt 80 bis 100 Gew.-% Methacrylsäureester oder Acrylsäureester eingesetzt, jeweils bezogen auf das Gesamtgewicht der zur Herstellung der Organopolymere b) eingesetzten Monomere α). Die Monomere β) werden vorzugsweise zu 0,1 bis 15 Gew.-%, besonders bevorzugt zu 0,3 bis 10 Gew.-%, ganz besonders bevorzugt zu 1 bis 9 Gew.-% und am meisten bevorzugt zu 1,5 bis 9 Gew.-% eingesetzt, jeweils bezogen auf das Gesamtgewicht der Monomere zur Herstellung der Organopolymere b). Die Organopolymere b) enthalten Einheiten der Monomere α) und β) vorzugsweise zu mindestens 92 Gew.-%, besonders bevorzugt zu mindestens 95 Gew.-%, ganz besonders bevorzugt zu mindestens 97 Gew.-% und am meisten bevorzugt zu mindestens 98 Gew.-%, jeweils bezogen auf das Gesamtgewicht der Monomere zur Herstellung der Organopolymere b). Die Monomere γ) werden vorzugsweise zu 0,1 bis 10 Gew.-%, besonders bevorzugt zu 0,1 bis 5 Gew.-% und am meisten bevorzugt zu 0,1 bis 3 Gew.-% eingesetzt, jeweils bezogen auf das Gesamtgewicht der Monomere zur Herstellung der Organopolymere b). Die Organopolymere b) enthalten insbesondere dann Einheiten von einem oder mehreren Monomeren γ), falls die Organopolymere b) mehr als 4,5 Gew.-%, oder mehr als 4,0 Gew.-% oder mehr als 3,0 Gew.-%, bezogen auf das Gesamtgewicht der Organopolymere b), an ethylenisch ungesättigten Carbonsäuren β) enthalten. Selbstverständlich können die Organopolymere b) aber auch Einheiten von Monomeren γ) enthalten, wenn die Organopolymere b) beispielsweise weniger als 3,0 Gew.-% an Monomeren β) enthalten.

Die Monomere δ) umfassen beispielsweise ein oder mehrere ethylenisch ungesättigte Silane, wie (Meth)acryloxypropyltri(alkoxy)silane oder (Meth)acryloxypropyldialkoxymethylsilane, Vinyltrialkoxysilane oder Vinylmethyldialkoxysilane, wobei als Alkoxygruppen beispielsweise Methoxy-, Ethoxy-, Propoxy-, Butoxy-, Acetoxy-, und Ethoxypropylenglykolether-Reste enthalten sein können. Bevorzugte ethylenisch ungesättigte Silane sind Vinyltrimethoxysilan, Vinylmethyldimethoxysilan, Vinyltriethoxysilan, Vinylmethyldiethoxysilan, Vinyltripropoxysilan, Vinyltriisopropoxysilan, Vinyltris-(1-methoxy)-isopropoxysilan, Vinyltributoxysilan, Vinyltriacetoxysilan, 3-Methacryloxypropyltrimethoxysilan, 3-Methacryloxypropylmethyldimethoxysilan, Methacryloxymethyltrimethoxysilan, 3-Methacryloxypropyl-tris(2-methoxyethoxy)silan, Vinyltrichlorsilan, Vinylmethyldichlorsilan, Vinyltris-(2-methoxyethoxy)silan, Trisacetoxyvinylsilan, Allylvinyltrimethoxysilan, Allyltriacetoxysilan, Vinyldimethylmethoxysilan, Vinyldimethylethoxysilan, Vinylmethyldiacetoxysilan, Vinyldimethylacetoxysilan, Vinylisobutyldimethoxysilan, Vinyltriisopropyloxysilan, Vinylltributoxysilan, Vinyltrihexyloxysilan, Vinylmethoxydihexyloxysilan, Vinyltrioctyloxysilan, Vinyldimethoxyoctyloxysilan, Vinylmethoxydioctyloxysilan, Vinylmethoxydilauryloxysilan, Vinyldimethoxylauryloxysilan sowie auch Polyethylenglykol-modifizierte Silane. Besonders bevorzugte ethylenisch ungesättigte Silane sind Vinyltrimethoxysilan, Vinylmethyldimethoxysilan, Vinyltriethoxysilan, Vinylmethyldiethoxysilan, Vinyltris-(1-methoxy)-isopropoxysilan, Methacryloxypropyl-tris(2-methoxyethoxy)silan, 3-Methacryloxypropyltrimethoxysilan, 3-Methacryloxypropylmethyldimethoxysilan und Methacryloxymethyltrimethoxysilan. Die ethylenisch ungesättigten Silane weisen vorzugsweise keine hydrophilen Gruppen auf.

Vorzugsweise werden 0 bis 5 Gew.-%, besonders bevorzugt 0,1 bis 3 Gew.-% und am meisten bevorzugt 0,2 bis 1,5 Gew.-% ethylenisch ungesättigte Silane eingesetzt, jeweils bezogen auf das Gesamtgewicht der Monomere zur Herstellung der Organopolymere b). Durch den Einsatz der ethylenisch ungesättigten Silane kann beispielsweise die Wasser- oder Alkalibeständigkeit der Kompositpartikel verbessert werden.

Des Weiteren umfassen die Monomere δ) auch 0 bis 10 Gew.-%, bezogen auf das Gesamtgewicht der Monomere zur Herstellung der Organopolymere b), Hilfsmonomere, wie beispielsweise ethylenisch ungesättigte Carbonsäureamide und -nitrile, vorzugsweise Acrylamid und Acrylnitril; Diester der Fumarsäure und Maleinsäure, wie die Diethyl- und Diisopropylester; Carbonsäureanhydride, wie Maleinsäureanhydrid; ethylenisch ungesättigte Sulfonsäuren bzw. deren Salze, vorzugsweise Vinylsulfonsäure, 2-Acrylamido-2-methyl-propansulfonsäure; ethylenisch ungesättigte Epoxide, wie Glycidylmethacrylat oder Glycidylacrylat; ethylenisch ungesättigte Hydroxy- oder Keto-Verbindungen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat; oder Vinylether, wie Methyl-, Ethyl- oder iso-Butylvinylether. Die Hilfsmonomere haben vorzugsweise 1 bis 12 C-Atome, besonders bevorzugt 1 bis 8 C-Atome und am meisten bevorzugt 1 bis 6 C-Atome.

Beispiele für geeignete Organopolymere b) sind (Meth)acrylat-Polymerisate, Styrol-(Meth)acrylat-Polymerisate, Vinylester-Polymerisate, die jeweils eine oder mehrere unterschiedliche Einheiten von ethylenisch ungesättigten Carbonsäuren β) und gegebenenfalls ein oder mehrere unterschiedliche Einheiten der Monomere γ) und/oder der Monomere δ) enthalten; mit den Maßgaben, dass die Organopolymere b) mindestens 92 Gew.-% an Einheiten der Monomere α) und β) enthalten, und dass die Organopolymere b) Einheiten von einem oder mehreren Monomeren γ) enthalten, falls die Organopolymere b) mehr als 4,5 Gew.-% an ethylenisch ungesättigten Carbonsäuren β) enthalten; wobei sich die Angaben in Gew.-% jeweils auf das Gesamtgewicht der Organopolymere b) beziehen.

Bevorzugt werden als Organopolymere b) Polymerisate von Vinylestern, insbesondere Vinylacetat, mit 1 bis 15 Gew.-% an ethylenisch ungesättigten Carbonsäuren β), wie Acrylsäure oder Methacrylsäure, und gegebenenfalls 0,1 bis 5 Gew.-% an Monomeren γ), wie Trimethylolethantrimethacrylat, und gegebenenfalls 0,1 bis 5 Gew.-% von ethylenisch ungesättigten Silanen, wie Vinyltrimethoxysilan, Vinyltriethoxysilan, Vinylmethyldimethoxysilan oder Vinylmethyldiethoxysilan, wobei gegebenenfalls noch Hilfsmonomere in den oben genannten Mengen enthalten sein können; mit den Maßgaben, dass die Organopolymere b) mindestens 92 Gew.-% an Einheiten der Monomere α) und β) enthalten, und dass die Organopolymere b) Einheiten von einem oder mehreren Monomeren γ) enthalten, falls die Organopolymere b) mehr als 4,5 Gew.-% an ethylenisch ungesättigten Carbonsäuren β) enthalten; wobei sich die Angaben in Gew.-% auf jeweils 100 Gew.-% aufaddieren.

Bevorzugt werden als Organopolymere b) auch Polymerisate von (Meth)acrylsäureestern, wie Methyl(meth)acrylat und/oder n-Butyl(meth)acrylat, mit 1 bis 15 Gew.-% an ethylenisch ungesättigten Carbonsäuren β), wie Acrylsäure oder Methacrylsäure, und gegebenenfalls 0,1 bis 5 Gew.-% an Monomeren γ), wie Trimethylolethantrimethacrylat, und gegebenenfalls 0,1 bis 5 Gew.-% von ethylenisch ungesättigten Silanen, wie Vinyltrimethoxysilan, Vinyltriethoxysilan, Vinylmethyldimethoxysilan oder Vinylmethyldiethoxysilan; wobei gegebenenfalls noch Hilfsmonomere in den oben genannten Mengen enthalten sein können; mit den Maßgaben, dass die Organopolymere b) mindestens 92 Gew.-% an Einheiten der Monomere α) und β) enthalten, und dass die Organopolymere b) Einheiten von einem oder mehreren Monomeren γ) enthalten, falls die Organopolymere b) mehr als 4,5 Gew.-% an ethylenisch ungesättigten Carbonsäuren β) enthalten; wobei sich die Angaben in Gew.-% auf jeweils 100 Gew.-% aufaddieren.

Zur Herstellung der Kompositpartikel werden die Organopolymere b) vorzugsweise zu 19 bis 90 Gew.-%, besonders bevorzugt 30 bis 80 Gew.-% und am meisten bevorzugt 50 bis 70 Gew.-% eingesetzt, jeweils bezogen auf die Gesamtmasse der Komponenten a), b) und c) zur Herstellung der Kompositpartikel.

Die Monomerauswahl bzw. die Auswahl der Gewichtsanteile der Comonomere erfolgt dabei so, dass im allgemeinen eine Glasübergangstemperatur Tg von -50°C bis +70°C, vorzugsweise -30°C bis +50°C und besonders bevorzugt von -20°C bis +30°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Organopolymere b) können nach der dem Fachmann bekannten radikalischen Polymerisation wie z.B. Suspensions-, Lösungs-, Masse- oder, vorzugsweise Mini- und Emulsionspolymerisationsverfahren hergestellt werden, wie beispielsweise in der DE-A 102006050336 beschrieben. Das Emulsionspolymerisationsverfahren wird vorzugsweise bei einem pH-Wert zwischen 3 und 6 durchgeführt. Die Organopolymere b) sind dabei vorzugsweise durch die gängigen ionischen oder nichtionischen Emulgatoren stabilisiert, üblicherweise in Mengen von 1 bis 5 Gew.-% bezogen auf die Monomermenge. Beispiele für geeignete Emulgatoren sind anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten.

Der Einsatz von Schutzkolloiden, wie Polyvinylakohol, ist in manchen Fällen weniger bevorzugt, da diese die Wasserbeständigkeit der Kompositpartikel oder deren Anwendungsprodukte negativ beeinflussen können. Vorzugsweise werden zur Herstellung der Organopolymere b) weniger als 3 Gew.-% Schutzkolloide eingesetzt, bezogen auf die Monomermenge. Besonders bevorzugt werden keine Schutzkolloide eingesetzt.

Zur Herstellung der Kompositpartikel können als Kupplungsreagenzien c1) beispielsweise ein oder mehrere funktionalisierte Alkylalkoxysilane der allgemeinen Formel

(R²O)ₙSi(R³X)₄₋ₙ (II)

eingesetzt werden, worin
R² die oben für Formel I angegebenen Bedeutungen annehmen kann,
R³ einen gegebenenfalls substituierten, Alkylen-Rest mit 1 bis 20 Kohlenstoffatomen, vorzugsweise mit 1 bis 6 Kohlenstoffatomen bedeutet, in dem einander nicht benachbarte Methyleneinheiten durch Sauerstoff ersetzt sein können, und
X über eine kovalente Bindung an R³ gebunden ist und für einen Aminorest -NHR⁴, einen Epoxyrest -CR⁵(O)CR⁶R⁷ oder einen Isocyanatrest -NCO steht, wobei
R⁴ ein Wasserstoffatom oder einen gegebenenfalls substituierten Alkyl-, Aryl- oder Aminoalkylrest mit 1 bis 10 Kohlenstoffatomen bedeutet,
R⁵, R⁶, R⁷ ein Wasserstoffatom oder einen gegebenenfalls substituierten Alkyl- oder Arylrest mit 1 bis 10 Kohlenstoffatomen bedeutet,
wobei die jeweiligen Reste R², R³, R⁴, R⁵, R⁶ und R⁷ ihre Werte jeweils unabhängig voneinander annehmen, und
wobei R³X über ein Kohlenstoffatom des Restes R³ an das Siliciumatom der Formel II gebunden ist.

Für die funktionalisierten Alkylalkoxysilane der Formel II sind als Reste R² dieselben Reste geeignet, bevorzugt und besonders bevorzugt, die für die Siliciumoxide als Reste R² entsprechend aufgeführt sind.

Die Reste R³ der Gruppe R³X der funktionalisierten Alkylalkoxysilane der Formel II sind vorzugsweise nicht substituiert. Besonders bevorzugt steht R³ für einen Alkylen-Rest mit 1 bis 6 Kohlenstoffatomen, am meisten bevorzugt für Methylen, Ethylen oder Propylen.

Vorzugsweise steht R⁴ für ein Wasserstoffatom, einen Alkyl-, Aryl- oder Aminoalkyrest mit 1 bis 6 Kohlenstoffatomen, besonders bevorzugt Wasserstoffatom, 2-Aminoethyl, Phenyl, Cyclohexyl, Methyl, Ethyl, Propyl oder Butyl. Die Reste R⁵, R⁶, R⁷ stehen vorzugsweise für ein Wasserstoffatom.

Die einzelnen Reste R, R¹, R², R³, R⁴, R⁵, R⁶, R⁷ bzw. X und die Werte x, y, n der Verbindungen der Formeln I bzw. II nehmen ihre Bedeutungen jeweils unabhängig voneinander an. In allen Ausführungsformen der Formeln I bzw. II ist das Siliciumatom jeweils vierwertig.

Bevorzugt werden Aminoalkylentrialkoxysilane der Formel II und Glycidoxyalkylentrialkoxysilane der Formel II eingesetzt. Beispiele für bevorzugte funktionalisierte Alkylalkoxysilane der Formel II sind (3-Aminopropyl)triethoxysilan, (3-Aminopropyl)-trimethoxysilan, N-(2-Aminoethyl)(3-Aminopropyl)triethoxysilan, N-(2-Aminoethyl)(3-Aminopropyl)trimethoxysilan, N-(2-Aminoethyl)(3-Aminopropyl)methyldimethoxysilan, N-Cyclohexylaminomethylmethyldiethoxysilan, (3-Glycidoxypropyl)triethoxysilan, (3-Glycidoxypropyl)trimethoxysilan. Bevorzugt sind (3-Aminopropyl)triethoxysilan und(3-Glycidoxypropyl)triethoxysilan. Besonders bevorzugt sind Epoxyreste, wie (3-Glycidoxypropyl)triethoxysilan.

Zur Herstellung der Kompositpartikel werden die Kupplungsreagenzien c1) vorzugsweise zu 0,1 bis 15 Gew.-%, besonders bevorzugt 0,5 bis 10 Gew.-% und am meisten bevorzugt 1 bis 5 Gew.-% eingesetzt, jeweils bezogen auf die Gesamtmasse der Komponenten a), b) und c1) zur Herstellung der Kompositpartikel.

Für die Kupplungsreagenzien c2) können als ungesättigte Alkoxysilane beispielsweise ein oder mehrere Verbindungen der allgemeinen Formel R⁸SiR⁹₀₋₂ (OR¹⁰)₁₋₃ eingesetzt werden, wobei R⁹ ein C₁- bis C₃-Alkylrest, C₁- bis C₃-Alkoxyrest oder Halogen (z.B. Cl oder Br) ist, R die Bedeutung CH₂=CR¹¹-(CH₂)₀₋₁ oder CH₂=CR¹¹CO₂(CH₂)₁₋₃ hat, R¹⁰ ein unverzweigter oder verzweigter, gegebenenfalls substituierter Alkylrest mit 1 bis 12 C-Atomen, vorzugsweise 1 bis 3 C-Atomen, ist oder ein Acylrest mit 2 bis 12 C-Atomen ist, wobei R¹⁰ gegebenenfalls durch eine Ethergrup-pe unterbrochen sein kann, und R¹¹ für H oder CH₃ steht.

Bevorzugt sind γ-Acryl- bzw. γ-Methacryloxypropyltri(alkoxy)silane, α-Methacryloxymethyltri(alkoxy)silane, γ-Methacryloxypropylmethyldi(alkoxy)silane, Vinylalkyldi(alkoxy)silane und Vinyltri(alkoxy)silane, wobei als Alkoxygruppen beispielsweise Methoxy-, Ethoxy-, Methoxyethylen-, Ethoxyethylen-, Methoxypropylenglykolether- bzw. Ethoxypropylenglykolether-Reste eingesetzt werden können. Beispiele für geeignete ungesättigte Alkoxysilane sind Vinyltrimethoxysilan, Vinylmethyldimethoxysilan, Vinyltriethoxysilan, Vinylmethyldiethoxysilan, Vinyltripropoxysilan, Vinyltriisopropoxysilan, Vinyltris-(1-methoxy)-isopropoxysilan, Vinyltributoxysilan, Vinyltriacetoxysilan, 3-Methacryloxypropyltrimethoxysilan, 3-Methacryloxypropylmethyldimethoxysilan, Methacryloxymethyltrimethoxysilan, 3=Methacryloxypropyl-tris(2-methoxyethoxy)silan, Vinyltrichlorsilan, Vinylmethyldichlorsilan, Vinyltris-(2-methoxyethoxy)silan, Trisacetoxyvinylsilan, Allylvinyltrimethoxysilan, Allyltriacetoxysilan, Vinyldimethylmethoxysilan, Vinyldimethylethoxysilan, Vinylmethyldiacetoxysilan, Vinyldimethylacetoxysilan, Vinylisobutyldimethoxysilan, Vinyltriisopropyloxysilan, Vinylltributoxysilan, Vinyltrihexyloxysilan, Vinylmethoxydihexyloxysilan, Vinyltrioctyloxysilan, Vinyldimethoxyoctyloxysilan, Vinylmethoxydioctyloxysilan, Vinylmethoxydilauryloxysilan, Vinyldimethoxylauryloxysilan sowie auch Polyethylenglykol-modifizierte Silane.

Als ungesättigte Alkoxysilane werden am meisten bevorzugt Vinyltrimethoxysilan, Vinylmethyldimethoxysilan, Vinyltriethoxysilan, Vinylmethyldiethoxysilan, Vinyltris-(1-methoxy)-isopropoxysilan, Methacryloxypropyl-tris(2-methoxyethoxy)silan, 3-Methacryloxypropyltrimethoxysilan, 3-Methacryloxypropylmethyldimethoxysilan und Methacryloxymethyltrimethoxysilan.

Bei Anwendung der Kupplungsreagenzien c2) werden vorzugsweise 0,1 bis 12 Gew.-%, besonders bevorzugt 0,2 bis 10 Gew.-% und am meisten bevorzugt 0,5 bis 9 Gew.-% ungesättigte Alkoxysilane eingesetzt, jeweils bezogen auf das Gewicht der Oxid-Partikel a).

Im Falle der Kupplungsreagenzien c2) werden die funktionellen Gruppen der ethylenisch ungesättigte Organomonomere vorzugsweise ausgewählt aus der Gruppe umfassend Carbonsäuregruppen oder deren Derivate, wie Ester, Amide, Nitrile oder Anhydride, Sulfonsäure-, Epoxy- und Hydroxy-Gruppen.

Beispiele für ethylenisch ungesättigte Organomonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid, Diacetonacrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure; ethylenisch ungesättigte Epoxide, wie Glycidylmethacrylat oder Glycidylacrylat; ethylenisch ungesättigte Hydroxy-Verbindungen, beispielsweise Methacrylsäure- und Acrylsäurehydroxyalkylester wie Hydroxyethyl-, Hydroxypropyl- oder Hydroxybutylacrylat oder -methacrylat. Bevorzugt sind ethylenisch ungesättigte Epoxide, wie Glycidylmethacrylat oder Glycidylacrylat und Diacetonacrylamid.

Die Kupplungsreagenzien c2) enthalten vorzugsweise 0,1 bis 12 Gew.-%, besonders bevorzugt 0,2 bis 8 Gew.-% und am meisten bevorzugt 0,5 bis 5 Gew.-% ethylenisch ungesättigte Organomonomere, jeweils bezogen auf das Gewicht der Organopolymere b).

Die Kupplungsreagenzien c2) können gegebenenfalls zusätzlich ein oder mehrere weitere ethylenisch ungesättigte Monomere umfassen, wie beispielsweise die oben als Monomere α), Monomere γ) oder Hilfsmonomere als geeignet, bevorzugt, besonders bevorzugt aufgeführten Monomere. Hierbei sind die Monomere γ) bevorzugt.

Die Kupplungsreagenzien c2) können die weiteren ethylenisch ungesättigten Monomere beispielsweise zu 0 bis 10 Gew.-% und vorzugsweise zu 0,1 bis 5 Gew.-% enthalten, jeweils bezogen auf das Gesamtgewicht der Oxid-Partikel a) und der Organopolymere b).

Die Kompositpartikel haben mittlere Teilchengrößen von vorzugsweise 20 nm bis 1.000 nm, besonders bevorzugt von 40 bis 800 nm und am meisten bevorzugt von 60 bis 300 nm. Die anorganischen Domänen der Kompositpartikel haben mittlere Teilchengrößen von vorzugsweise 2 nm bis 500 nm, besonders bevorzugt von 5 nm bis 100 nm und am meisten bevorzugt von 10 nm bis 70 nm (bestimmt mit dem Transmissionselektronenmikroskop Libra 120 der Firma Zeiss). Die Kompositlpartikel haben eine Viskosität von ≤ 9.000 mPas (bestimmt mit einem Brookfield Viskosimeter nach ISO 2555 bei einer Temperatur von 23°C und an Hand einer Dispersion der Kompositpartikel in Wasser mit einem Feststoffgehalt von 30%). Die Glasübergangstemperatur Tg der Kompositpartikel beträgt vorzugsweise -50 bis 110°C und besonders bevorzugt -40 bis 70°C (bestimmt mittels Differential Scanning Calorimetry (DSC)).

Ein weiterer Gegenstand der Erfindung sind Verfahren zur Herstellung von Kompositpartikel mittels Umsetzung von a) einem oder mehreren Oxid-Partikel, b) einem oder mehreren Organopolymeren und c) einem oder mehreren Kupplungsreagenzien.

Als Lösungsmittel für das Verfahren können Wasser oder ein organisches Lösungsmittel, gegebenenfalls in Kombination mit Wasser, oder ein Lösungsmittelgemisch aus mehreren organischen Lösungsmitteln, gegebenenfalls in Kombination mit Wasser, eingesetzt werden. Beispiele für organische Lösungsmittel sind Alkohole mit 1 bis 6-C-Atomen, insbesondere Methanol, Ethanol, n-Propanol und i-Propanol. Bevorzugtes Lösungsmittel ist Wasser, gegebenenfalls in Kombination mit einem oder mehreren organischen Lösungsmitteln. Besonders bevorzugt ist Wasser.

Die Temperatur beträgt vorzugsweise 20 bis 100°C, besonders bevorzugt 30 bis 90°C und am meisten bevorzugt 40 bis 85°C. Die Reaktionszeit beträgt vorzugsweise 1 bis 48 Stunden, besonders bevorzugt 1 bis 12 Stunden.

Die Oxid-Partikel a), die Organopolymere b) und die Kupplungsreagenzien c) können in reiner Form oder in einem Lösungsmittel eingesetzt werden. Vorzugsweise werden die Oxid-Partikel a) und die löslichen Organopolymere b) in einem Lösungsmittel und die Kupplungsreagenzien c) in reiner Form eingesetzt. Die Komponenten a), b) und c) können in beliebiger Weise gemischt oder vorgelegt werden. So können die Komponenten a), b) und c) in einem Lösungsmittel vollständig vorgelegt werden. Alternativ kann ein Teil der Komponenten a), b) bzw. c) vorgelegt werden, und der verbleibende Rest der Komponenten a), b) bzw. c) kann während der Durchführung des Verfahrens zugegeben werden. In einer bevorzugten Variante werden die Oxid-Partikel a) und die Organopolymere b) vollständig vorgelegt und gemischt, und die Kupplungsreagenzien c) anschließend zugegeben. In einer weiteren Alternative können auch zuerst die Oxid-Partikel a) mit Kupplungsreagenzien c) und separat davon Organopolymere b) mit Kupplungsreagenzien c) gemischt und anschließend diese separat hergestellten Mischungen miteinander vermischt werden.

Im Falle der Kupplungsreagenzien c2) werden vorzugsweise die Siliciumpartikel a), die Organopolymere b) sowie die Alkylalkoxysilane und die ethylenisch ungesättigten Organomonomere vorgelegt; alternativ können auch zuerst die Oxid-Partikel a) mit Alkylalkoxysilanen und separat davon Organopolymere b) mit ethylenisch ungesättigten Organomonomeren gemischt und anschließend diese separat hergestellten Mischungen miteinander vermischt werden. Die so hergestellten Mischungen der Komponenten a), b) und c2) werden beispielsweise bei 30 bis 100°C, vorzugsweise für 30 min bis 12 Stunden gerührt; und anschließend werden gegebenenfalls Initiatoren und gegebenenfalls weitere ethylenisch ungesättigte Monomere zugegeben und für weitere 30 min bis 12 Stunden bei vorzugsweise 30 bis 100°C gerührt. Beispiele für Initiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, tert.-Butylperoxopivalat, Cumolhydroperoxid, Isopropylbenzolmonohydroperoxid, Azobisisobutyronitril, Dicetylperoxydicarbonat, Dicyclohexylperoxydicarbonat, Dibenzoylperoxid.

Bei Einsatz der Kupplungsreagenzien c1) erfolgt die Umsetzung der Komponenten a), b) und c) zur Herstellung der Kompositpartikel im Allgemeinen durch eine Kondensationsreaktion. Eine Kondensationsreaktion ist eine chemische Umsetzung von Molekülen unter Austritt eines kleinen Moleküls, beispielsweise Wasser, Alkohol, Halogenwasserstoff oder Ammoniak, und Ausbildung einer kovalenten Bindung. Bei Einsatz der Kupplungsreagenzien c1) erfolgt die Umsetzung der Komponenten a), b) und c) zur Herstellung der Kompositpartikel im Allgemeinen mittels einer radikalisch initiierten Polymerisation.

Bei der Herstellung der Kompositpartikel liegt der pH-Wert im Allgemeinen zwischen 2 und 12. Bevorzugt sind pH-Werte zwischen 8 und 12 und am meisten bevorzugt pH-Werte zwischen 8 und 10. Bevorzugt sind auch pH-Werte zwischen 2 und 5. Der pH-Wert kann in bekannter Weise durch organische oder anorganische Säuren, Basen oder Puffer eingestellt werden, wie beispielsweise durch Zugabe von Salzsäure, Ammoniak, Aminen oder Alkalihydroxiden, wie beispielsweise Natronlauge.

Beim erfindungsgemäßen Verfahren können zusätzlich Emulgatoren zugesetzt werden, beispielsweise 1 bis 5 Gew.-% Emulgatoren, bezogen auf die Gesamtmasse der Komponenten a), b) und c). Geeignete und bevorzugte Emulgatoren sind beispielsweise dieselben, die oben für die Polymerisation zur Herstellung der Organopolymere b) entsprechend aufgeführt sind. Zur Stabilisierung der einzelnen Komponenten genügen aber in der Regel die Mengen an Emulgatoren, die in den Organopolymeren b) als Bestandteil üblicherweise enthalten sind. Vorzugsweise werden im Verfahren zur Herstellung der Kompositpartikel keine zusätzlichen Emulgatoren eingesetzt. Vorzugsweise sind im Verfahren zur Herstellung der Kompositpartikel keine Schutzkolloide zugegen.

Die so erhältlichen Kompositpartikel liegen in Form einer Dispersion vor und haben vorzugsweise einen Feststoffgehalt von 10 bis 65 Gew.-%, besonders bevorzugt von 25 bis 55 Gew.-% und am meisten bevorzugt von 35 bis 45 Gew.-%.

Nach Abschluss der chemischen Umsetzung der Komponenten a), b) und c) wird der Ansatz vorzugsweise neutralisiert, beispielsweise durch Zusatz der vorgenannten Säuren, Basen oder Puffer, vorzugsweise durch Zusatz von Ammoniak oder Aminen.

Nach Abschluss der chemischen Umsetzung der Komponenten a), b) und c) können Nebenprodukte, nicht umgesetzte Ausgangsstoffe, Lösungsmittel oder sonstige flüchtige Stoffe mittels Destillation, vorzugsweise unter reduziertem Druck, und gegebenenfalls unter Durchleiten oder Überleiten von Schleppgasen wie Luft, Stickstoff oder Wasserdampf entfernt werden.

Zur Herstellung der Kompositpartikel in Form von Pulvern werden die Dispersionen der Kompositpartikel getrocknet, gegebenenfalls unter Zusatz von Schutzkolloiden als Trocknungshilfe. Geeignete Trocknungsverfahren sind beispielsweise die Wirbelschichttrocknung, die Walzentrocknung, die Gefriertrocknung oder die Sprühtrocknung. Geeignete Trocknungshilfsmittel sind beispielsweise Polyvinylalkohole. Vorzugsweise werden die wässrigen Mischungen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im Allgemeinen im Bereich von 45°C bis 120°C, bevorzugt zwischen 60°C bis 90°C gewählt. Die so erhaltenen Kompositpartikel sind in Wasser redispergierbar.

Bei der Trocknung hat sich vielfach ein Gehalt von bis zu 1.5 Gew.-% Antischaummittel, bezogen auf die polymeren Bestandteile, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäuren wie beispielsweise hochdisperse Kieselsäuren, Kaoline, Metakaolin, calciniertes Kaolin, Silicate mit Teilchengrößen vorzugsweise im Bereich von 10 nm bis 100 µm.

Zur Verbesserung der anwendungstechnischen Eigenschaften können den Kompositpartikeln weitere Zusätze zugegeben werden.

Weitere, in bevorzugten Ausführungsformen enthaltene Bestandteile der Kompositpartikel sind beispielsweise Bindemittel, Pigmente, Füllstoffe wie beispielsweise Zeolithe, Schaumstabilisatoren, Hydrophobierungsmittel oder Luftporenbildner. Vorzugsweise werden diese Zusätze während oder nach der Trocknung der Dispersion zugegeben.

Vorteilhafterweise sind die erfindungsgemäßen Kompositpartikel in organischen Lösungsmitteln, Reaktivverdünnern oder Wasser oder in Form von Pulvern stabil und neigen nicht zur Aggregation oder Separation, auch ohne Zugabe von Stabilisatoren, Emulgatoren oder Schutzkolloiden. Des Weiteren weisen die erfindungsgemäßen Kompositpartikel auch bei einem hohen Feststoffgehalt eine niedrige Viskosität auf, was für die weitere Verarbeitung und Applikation der Kompositpartikel von Vorteil ist. Die erfindungsgemäßen Kompositpartikel sind auch wasserbeständig, und dies auch bei sauren oder basischen pH-Werten.

Die Kompositpartikel eignen sich als Bindemittel, Cobindemittel oder Additive zur Verbesserung der anwendungstechnischen Eigenschaften mannigfacher Produkte. Durch Einsatz der Kompositpartikel in Beschichtungsmitteln oder Klebstoffen können beispielsweise deren Thermostabilität oder Kratzfestigkeit gesteigert werden. Kompositpartikel enthaltende Klebstoffe zeigen zudem häufig ein verbessertes Fließverhalten sowie ein stabiles E-Modul bei erhöhter Temperatur und ergeben nach Applikation beispielsweise abziehbare Klebstofffilme. Mit Kompositpartikel enthaltenden Beschichtungsmitteln können Beschichtungen mit Mattierungseffekt ausgestattet werden. Ebenso ist der Einsatz der Kompositpartikel in Formulierungen für Putze, Fassadenfarben, Pulverlacke, Kunststoff- und Kompositmaterialien, beispielsweise zur Herstellung von Kunststoff-, Kompositbauteilen oder Verpackungsmaterialien, vorteilhaft. Die Kompositpartikel eignen sich auch zur Oberflächenbehandlung für synthetische oder natürliche Materialien, wie Fasern oder Partikel, wie vorzugsweise Gesteine, Holz, Leder, Papier, Textilien, Kunststoffen, wie Kunststofffolien. Dabei wirken die Kompositpartikel beispielsweise als Primer zur Haftungsverstärkung, als Barriereschicht, Korrosionschutz oder schmutzabweisend. Der schmutzabweisende Effekt kann insbesondere bei entsprechenden Anwendungen in Teppichen oder Auslegware in vorteilhafter Weise genutzt werden. Mit den Kompositpartikeln können auch schwer brennbare Beschichtungen für Holz, Kunststoffe, Leder und Papier hergestellt werden. Gesteine können verfestigt oder saniert werden. In Produkten der Verpackungsindustrie kann durch Zusatz der Kompositpartikel eine Gasbarriere erzeugt werden.

Die so erhaltenen Kompositpartikel in Form von Pulvern oder in Form von Dispersionen können auch mit herkömmlichen Polymeren, wie beispielsweise Organopolymeren b), abgemischt und in dieser Form den vorgenannten Anwendungen zugeführt werden.

Die folgenden Beispiele dienen der detaillierten Erläuterung der Erfindung und sind in keiner Weise als Einschränkung zu verstehen.

### Herstellung des Silica a):

Es wurden 1020 g Tetraethoxysilan (Silicat TES 28; Handelsname der Firma Wacker Chemie) und 30 g Trimethylethoxysilan (Silane M3-Etoxy; Handelsname der Firma Wacker Chemie) zu 3000 g Wasser gegeben, durch Rühren homogenisiert und mittels einer wässrigen Ammoniaklösung der pH-Wert 9 eingestellt. Es wurde auf 30°C erwärmt und 10 h bei 30°C gerührt. Anschließend wurden die flüchtigen Komponenten und ein Teil des Wassers unter vermindertem Druck bei 60°C abdestilliert. Nach Abkühlen auf Raumtemperatur wurde filtriert (Maschenweite 70 Mikrometer). Es wurde ein transparentes wässriges Hydrolyseprodukt mit einem Feststoffgehalt von 40% erhalten.

### Herstellung der Organopolymere b):

### Polymer 1 (Pol-1):

In einem Reaktor mit einem Volumen von 3 Litern wurden 640 g deionisiertes Wasser, 3,1 g Natriumlaurylsulfat, 0,93 g Kaliumperoxodisulfat unter Stickstoffatmosphäre vorgelegt und unter Rühren auf 40°C erwärmt. Bei Erreichen von 40°C wurde die Lösung 1 in den Reaktor gegeben.

Anschließend wurde die Temperatur auf 80°C erhöht. Nach Erreichen dieser Temperatur wurde damit begonnen, räumlich voneinander getrennt eine Initiatorlösung (0,93 g Kaliumperoxodisulfat in 98 g Wasser) und die Lösung 2 in den Reaktor zuzugeben. Die Initiatorlösung wurde innerhalb von 3 Stunden und die Lösung 2 während 2,5 Stunden zudosiert.

### Lösung 1:

| | |
|---|---|
| Vinyltriethoxysilan : | 0,74g |
| Methacrylsäure: | 7,42g |
| Styrol: | 14,83g |
| Buthylacrylat: | 81,62g |
| Methylmethacrylat: | 43,63g |
| Trimethylolpropantrimethacrylat (TMPTMA): | 0,14g |
| Dodecylmercaptan: | 1,00g |

### Lösung 2:

| | |
|---|---|
| Vinyltriethoxysilan: | 2,36g |
| Methacrylsäure: | 23,48g |
| Styrol: | 46,97g |
| Buthylacrylat: | 258,48g |
| Methylmethacrylat: | 138,17g |
| Trimethylolpropantrimethacrylat (TMPTMA): | 0,14g |
| Dodecylmercaptan: | 0,46g |

Nach Ende der Dosierungen wurde 2 Stunden bei 80°C und 1 Stunde bei 85°C gerührt. Der pH-Wert wurde während der Polymerisation zwischen 3 und 5 gehalten, indem erforderlichenfalls entsprechende Mengen an wässriger Ammoniaklösung zugegeben wurden.
Anschließend wurde die Polymerdispersion mit Wasser verdünnt und der pH-Wert mit einer wässrigen Ammoniaklösung (12,5%-ig) auf 9 eingestellt. Es wurde eine Polymerlösung mit einem Feststoffgehalt von 40% erhalten.

### (Vergleichs)Polymere 2 bis 6 ((V)Pol-2 bis 6):

Analog zu Polymer 1, mit dem Unterschied, dass unterschiedliche Monomerzusammensetzungen eingesetzt wurden (siehe Tabelle 1).

**Tabelle 1: Zusammensetzung der Organopolymere b):**

| | Pol-1 | Pol-2 | Pol-3 | Pol-4 | VPol-5 | VPol-6 |
|---|---|---|---|---|---|---|
| Vinyltriethoxysilan | 0,5% | 0,0% | 0,0% | 0,0% | 0,5% | 0,5% |
| Methacrylsäure | 5,0% | 5,0% | 8,0% | 2,9% | 15,0% | 10,0% |
| Styrol | 10,0% | 10,0% | 10,0% | 10,0% | 10,0% | 10,0% |
| Buthylacrylat | 55,0% | 55,0% | 55,0% | 61,3% | 55,0% | 55,0% |
| Methylmethacrylat | 29,4% | 29,9% | 25,5% | 25,8% | 19,5% | 24,5% |
| TMPTMA^{a)} | 0,1% | 0,1% | 1,5% | 0,0% | 0,0% | 0,0% |
| Viskosität^{b)} [mPas] | 2.500 | 2.350 | 3.800 | 650 | Gel | 7.048 |

| | | | | | | |
|---|---|---|---|---|---|---|
| Die Prozentangaben in Tabelle 1 sind Angaben in Gewichtsprozent und beziehen sich auf die Gesamtmasse des jeweiligen Organopolymers; ^{a)} TMPTMA = Trimethylolpropantrimethacrylat; ^{b)} Brookfield-Viskosität bestimmt nach EN ISO 2555 bei 20 Umdrehungen und 23°C an Hand der jeweiligen Dispersion mit einem Feststoffgehalt von 40% und einem pH-Wert von 9. | | | | | | |

### Herstellung der Kompositpartikel:

### (Vergleichs)Beispiele 1 bis 6 ((V)Bsp. 1 bis 6): Epoxy-funktionalisiertes Silan als Kupplungsreagenz c1):

Unter Rühren wurden 1000g der jeweiligen Polymerlösung der (Vergleichs)Polymere 1 bis 6 (Feststoffgehalt jeweils 40% und pH-Wert jeweils 9) gegebenenfalls mit 670g des oben beschriebenen Silica a) (Feststoffgehalt von 40%, pH-Wert 9) entsprechend der Angaben in Tabelle 2 gemischt. Nach der Homogenisierung wurden gegebenenfalls 22g Geniosil GF 82 ((3-Glycidoxypropyl)triethoxysilan; Handelsname der Firma Wacker Chemie) zugegeben. Anschließend wurde 4 h bei 30°C und dann 2 h bei 60°C gerührt.
Danach wurden flüchtige Komponenten unter vermindertem Druck bei 60°C abdestilliert. Nach Abkühlen auf Raumtemperatur wurde die so erhaltene Dispersion filtriert (Maschenweite 70 Mikrometer). Der Feststoffgehalt der Kompositdispersion lag bei 40%.

**Tabelle 2: Zusammensetzung von Kompositpartikeln:**

| | Bsp. 1 | Bsp. 2 | Bsp. 3 | Bsp. 4 | VBsp. 5 | VBsp. 6 |
|---|---|---|---|---|---|---|
| Silica a)¹⁾ | + | + | + | + | - | + |
| Organopolymer b) | Pol-1 | Pol-2 | Pol-3 | Pol-4 | VPol-5 | VPol-6 |
| Geniosil GF 82¹⁾ | + | + | + | + | - | + |
| Viskosität³⁾ [mPas] | 1.200 | 1.350 | 2.800 | 150 | n.b.²⁾ | 6.800 |
| Stabilitätstest | + | + | + | + | n.b.²⁾ | + |
| Wasserbeständigkeit | + | + | + | + | n.b.²⁾ | - |

| | | | | | | |
|---|---|---|---|---|---|---|
| 1)+:die jeweilige Komponente wurde im jeweiligen Beispiel eingesetzt; -: die jeweilige Komponente wurde im jeweiligen Beispiel nicht eingesetzt; 2) Das Produkt lag in Form eines Gels vor, so dass der Parameter nicht bestimmbar war. 3) Brookfield-Viskosität bestimmt nach EN ISO 2555 bei 20 Umdrehungen und 23°C an Hand der jeweiligen Dispersion mit einem Feststoffgehalt von 40% und einem pH-Wert von 9. | | | | | | |

### (Vergleichs)Beispiele 7 bis 10 ((V)Bsp. 7 bis 10): Ethylenisch ungesättigtes Silan und ethylenisch ungesättigtes Epoxid als Kupplungsreagenz c2):

Unter Rühren wurden 1000 g der jeweiligen Polymerlösung der (Vergleichs)Polymere 1 bis 6 (Feststoffgehalt jeweils 40% und pH-Wert jeweils 9) und 670g des oben beschriebenen Silica a) (Feststoffgehalt von 40%, pH-Wert 9) sowie gegebenenfalls 4 g Geniosil GF 31 ((3-Methacryloxypropyl)trimethoxysilan, Handelsname der Firma Wacker Chemie) und gegebenenfalls 4 g Glycidylmethacrylat entsprechend der Angaben in Tabelle 3 gemischt. Nach der Homogenisierung wurde 3 h bei 60°C gerührt. Anschließend wurden 10 g Kaliumperoxodisulfat (3%-ige Lösung) und 2g Trimethylolpropantrimethacrylat(TMPTMA) in den Reaktor zugegeben und die Temperatur auf 75°C erhöht. Nach ca. 2 Stunden wurde die jeweilige Kompositdispersion auf Raumtemperatur abgekühlt.

**Tabelle 3: Zusammensetzung von Kompositpartikeln:**

| | Bsp. 7 | VBsp. 8 | VBsp. 9 | VBsp. 10 |
|---|---|---|---|---|
| Silica a)¹⁾ | + | + | + | + |
| Organopolymer b) | Pol-4 | Pol-4 | VPol-6 | VPol-6 |
| Geniosil GF 31^{1),2)} | 4 | - | 4 | - |
| Glycidylmethacrylat | 4 | - | 4 | - |
| Viskosität³⁾ [mPas] | 190 | 120 | 5.250 | 5.850 |
| Stabilitätstest | + | - | + | - |
| Wasserbeständigkeit | + | + | - | - |

| | | | | |
|---|---|---|---|---|
| 1)+:die jeweilige Komponente wurde im jeweiligen Beispiel eingesetzt; -: die jeweilige Komponente wurde im jeweiligen Beispiel nicht eingesetzt; 2) Geniosil GF 31 = (3-Methacryloxypropyl)trimethoxysilan; 3) Brookfield-Viskosität bestimmt nach EN ISO 2555 bei 20 Umdrehungen und 23°C an Hand der jeweiligen Dispersion mit einem Feststoffgehalt von 40% und einem pH-Wert von 9. | | | | |

### Austestung der Kompositpartikel

### Stabilitätstest:

Die jeweilige Dispersion der Kompositpartikel der (Vergleichs)Beispiele wurde durch Zugabe von Wasser auf einen Feststoffgehalt von 10 Gew.-% verdünnt und mit wässriger Ammoniaklösung auf einen pH-Wert von 9 eingestellt. Die jeweilige Dispersion wurde in einen Standzylinder eingefüllt, verschlossen und unter Normalbedingungen nach DIN50014 gelagert. Nach 4 Wochen bei Normalbedingungen nach DIN50014 wurden die Dispersionen optisch qualitativ bewertet:
(+) stabile Dispersion, keine Sedimentbildung;
(-) instabile Dispersion, Sedimentbildung.

### Wasserbeständigkeit:

Die jeweilige Dispersion der Kompositpartikel der (Vergleichs)Beispiele wurde 24 h nach ihrer Herstellung mit einem Rakel auf eine Glasplatte aufgetragen (Nassschichtdicke 100 Mikrometer) und 24 h bei Normalbedingungen nach DIN50014 getrocknet. Auf die so erhaltenen trockenen Filme wurden anschließend Wassertropfen aufgebracht. Die Proben wurden mit einem Uhrglas abgedeckt. Nach 24 Stunden bei Normalbedingungen nach DIN50014 wurden die mit Wasser versetzten Stellen optisch qualitativ wie folgt bewertet:
(+) keine Veränderung;
(-) Veränderung in Form von Quellung bzw. Blasenbildung.

Aus den Austestungen geht hervor (siehe Angaben in den Tabellen 2 und 3), dass die erfindungsgemäßen Kompositpartikel auch nach langer Lagerzeit stabil sind. Aus den erfindungsgemäßen Kompositpartikel hergestellten Filme sind wasserbeständig. Des Weiteren weisen die erfindungsgemäßen Kompositpartikel im Vergleich zu den nicht erfindungsgemäßen Kompositpartikel niedrige Viskositäten auf, was die Handhabung und Verarbeitbarkeit der erfindungsgemäßen Kompositpartikel erleichtert. Die erfindungsgemäßen Kompositpartikel können deswegen beispielsweise auch in Form von Dispersionen mit höheren Feststoffgehalten eingesetzt werden, wodurch sich der Transport der Dispersionen oder auch das Trocknen der Dispersionen effizienter gestaltet.

## Patentansprüche

1. Kompositpartikel erhältlich durch Umsetzung von a) einem oder mehreren anorganischen Oxiden (Oxid-Partikel) mit einem mittleren Durchmesser von < 1000 nm, b) einem oder mehreren Organopolymeren und c) einem oder mehreren Kupplungsreagenzien, wobei Oxid-Partikel a) und Organopolymere b) über Einheiten von Kupplungsreagenzien c) verknüpft werden, **dadurch gekennzeichnet, dass**
als Organopolymere b) ein oder mehrere Polymerisate von
α) einem oder mehreren ethylenisch ungesättigten Monomeren ausgewählt aus der Gruppe umfassend Vinylester von Carbonsäuren mit 1 bis 15 C-Atomen, Methacrylsäureester oder Acrylsäureester von Carbonsäuren mit unverzweigten oder verzweigten Alkoholen mit 1 bis 15 C-Atomen und Olefine, Vinylaromaten und Vinylhalogenide, und
β) einer oder mehreren ethylenisch ungesättigten Carbonsäuren mit 3 bis 11 C-Atomen, und gegebenenfalls
γ) einem oder mehreren Monomeren enthaltend mindestens zwei ethylenisch ungesättigte Gruppen und gegebenenfalls
δ) einem oder mehreren weiteren ethylenisch ungesättigten Monomeren eingesetzt werden,
mit den Maßgaben, dass die Organopolymere b) mindestens 91 Gew.-% an Einheiten der Monomere α) und β) enthalten, und dass die Organopolymere b) Einheiten von einem oder mehreren Monomeren γ) enthalten, sofern die Organopolymere b) mehr als 4,9 Gew.-% an Einheiten der ethylenisch ungesättigten Carbonsäuren β) enthalten,
wobei sich die Angaben in Gew.-% jeweils auf das Gesamtgewicht der Organopolymere b) beziehen, und
die Kupplungsreagenzien c) ausgewählt werden aus der Gruppe umfassend
c1) ein oder mehrere Alkylalkoxysilane, deren Alkylgruppen mindestens eine Amino-, Epoxy-, Merkapto- oder IsocyanatGruppe aufweisen, und
c2) ein oder mehrere ungesättigte Alkoxysilane und zudem ein oder mehrere ethylenisch ungesättigte Organomonomere enthaltend mindestens eine funktionelle Gruppe ausgewählt aus der Gruppe umfassend Carbonsäuregruppen oder deren Derivate, Sulfonsäure-, Epoxy- und Hydroxy-Gruppen.

2. Kompositpartikel nach Anspruch 1, **dadurch gekennzeichnet, dass** als anorganische Oxide a) ein oder mehrere Siliciumoxide bestehend aus Einheiten der allgemeinen Formel
R¹ₓSi(OR²)_{y}O_{(4-x-y)/2} (I)
eingesetzt werden, worin
x 0, 1, 2 oder 3 und y 0, 1 oder 2 ist,
mit der Maßgabe, dass die Summe x+y≤3 ist,
R¹ einen SiC-gebundenen einwertigen Kohlenwasserstoffrest mit 1 bis 18 Kohlenstoffatomen,
R² ein Wasserstoffatom oder einen Kohlenwasserstoffrest mit 1 bis 18 Kohlenstoffatomen, der durch ein oder mehrere voneinander separate Sauerstoffatome unterbrochen sein kann, oder einen Rest der Formel -COCH₃, -COC₂H₅ oder -CH₂CH₂OH bedeutet,
wobei die einzelnen R¹, R² sowie x und y ihre Bedeutung jeweils unabhängig voneinander annehmen.

3. Kompositpartikel nach Anspruch 1 oder 2, **dadurch gekennzeichnet, dass** als Organopolymere b) Polymerisate von Vinylestern mit 1 bis 15 Gew.-% an ethylenisch ungesättigten Carbonsäuren β) und gegebenenfalls 0,1 bis 5 Gew.-% an Monomeren γ) und gegebenenfalls 0,1 bis 5 Gew.-% an ethylenisch ungesättigten Silanen eingesetzt werden, mit den Maßgaben, dass die Organopolymere b) mindestens 92 Gew.-% an Einheiten der Vinylester und der ethylenisch ungesättigten Carbonsäuren β) enthalten, und dass die Organopolymere b) Einheiten von einem oder mehreren Monomeren γ) enthalten, falls die Organopolymere b) mehr als 4,5 Gew.-% an ethylenisch ungesättigten Carbonsäuren β) enthalten; wobei sich die Angaben in Gew.-% auf jeweils 100 Gew.-% aufaddieren.

4. Kompositpartikel nach Anspruch 1 bis 3, **dadurch gekennzeichnet, dass** als Organopolymere b) Polymerisate von (Meth)acrylsäureestern mit 1 bis 15 Gew.-% an ethylenisch Ungesättigten Carbonsäuren β) und gegebenenfalls 0,1 bis 5 Gew.-% an Monomeren γ) und gegebenenfalls 0,1 bis 5 Gew.-% an ethylenisch ungesättigten Silanen eingesetzt werden, mit den Maßgaben, dass die Organopolymere b) mindestens 92 Gew.-% an Einheiten der (Meth)acrylsäureester und der ethylenisch ungesättigten Carbonsäüren β) enthalten, und dass die Organopolymere b) Einheiten von einem oder mehreren Monomeren γ) enthalten, falls die Organopolymere b) mehr als 4,5 Gew.-% an ethylenisch ungesättigten Carbonsäuren β) enthalten; wobei sich die Angaben in Gew.-% auf jeweils 100 Gew.-% aufaddieren.

5. Kompositpartikel nach Anspruch 1 bis 4, **dadurch gekennzeichnet, dass** als Kupplungsreagenzien c1) ein oder mehrere funktionalisierte Alkylalkoxysilane der allgemeinen Formel
(R²O)ₙSi(R³X)₄₋ₙ (II)
eingesetzt werden, worin
R² ein Wasserstoffatom oder einen Kohlenwasserstoffrest mit 1 bis 18 Kohlenstoffatomen bedeutet,
R³ einen gegebenenfalls substituierten, Alkylen-Rest mit 1 bis 20 Kohlenstoffatomen bedeutet, in dem einander nicht benachbarte Methyleneinheiten durch Sauerstoff ersetzt sein können, und
X über eine kovalente Bindung an R³ gebunden ist und für einen Aminorest -NHR⁴, einen Epoxyrest -CR5(O)CR⁶R⁷ oder einen Isocyanatrest -NCO steht, wobei
R⁴ ein Wasserstoffatom oder einen gegebenenfalls substituierten Alkyl-, Aryl- oder Aminoalkylrest mit 1 bis 10 Kohlenstoffatomen bedeutet,
R⁵, R⁶, R⁷ ein Wasserstoffatom oder einen gegebenenfalls substituierten Akyl- oder Arylrest mit 1 bis 10 Kohlenstoffatomen bedeutet,
wobei die jeweiligen Reste R², R³, R⁴, R⁵, R⁶ und R⁷ ihre Werte jeweils unabhängig voneinander annehmen, und
wobei R³X über ein Kohlenstoffatom des Restes R³ an das Siliciumatom der Formel II gebunden ist.

6. Kompositpartikel nach Anspruch 1 bis 5, **dadurch gekennzeichnet, dass** für die Kupplungsreagenzien c2) als ungesättigte Alkoxysilane ein oder mehrere Verbindungen der allgemeinen Formel R⁸SiR⁹₀₋₂(OR¹⁰)₁₋₃ eingesetzt werden, wobei R⁹ ein C₁- bis C₃-Alkylrest, C₁- bis C₃-Alkoxyrest oder Halogen ist, R die Bedeutung CH₂=CR¹¹-(CH₂)₀₋₁ oder CH₂=CR¹¹CO₂ (CH₂)₁₋₃ hat, R¹⁰ ein unverzweigter oder verzweigter, gegebenenfalls substituierter Alkylrest mit 1 bis 12 C-Atomen oder ein Acylrest mit 2 bis 12 C-Atomen ist, wobei R¹⁰ gegebenenfalls durch eine Ethergruppe unterbrochen sein kann, und R¹¹ für H oder CH₃ steht.

7. Kompositpartikel nach Anspruch 1 bis 6, **dadurch gekennzeichnet, dass** für die Kupplungsreagenzien c2) als ethylenisch ungesättigte Organomonomere ethylenisch ungesättigte Mono- und Dicarbonsäuren, ethylenisch ungesättigte Carbonsäureamide oder -nitrile, Mono- oder Diester der Fumarsäure oder Maleinsäure, ethylenisch ungesättigte Sulfonsäuren oder deren Salze, ethylenisch ungesättigte Epoxide oder ethylenisch ungesättigte Hydroxy-Verbindungen eingesetzt werden.

8. Verfahren zur Herstellung der Kompositpartikel nach Anspruch 1 bis 7, mittels Umsetzung von a) einem oder mehreren Oxid-Partikel, b) einem oder mehreren Organopolymeren und c) einem oder mehreren Kupplungsreagenzien.

9. Verwendung der Kompositpartikel gemäß Anspruch 1 bis 7 als Bindemittel, Cobindemittel oder Additiv für Pulverlacke, Beschichtungsmittel, Klebstoffe oder in Formulierungen für Kunststoff- oder Kompositmaterialien.

10. Verwendung der Kompositpartikel gemäß Anspruch 1 bis 7 zur Oberflächenbehandlung von synthetischen oder natürlichen Materialien, wie Gesteine, Holz, Leder, Papier, Textilien oder Kunststoffe.

## Claims

1. Composite particles obtainable by conversion of a) one or more inorganic oxides (oxide particles) having a mean diameter of < 1000 nm, b) one or more organopolymers and c) one or more coupling reagents, oxide particles a) and organopolymers b) being joined to one another via units of coupling reagents c), **characterized in that**
the organopolymers b) used are one or more polymers of
α) one or more ethylenically unsaturated monomers selected from the group comprising vinyl esters of carboxylic acids having 1 to 15 carbon atoms, methacrylic esters or acrylic esters of carboxylic acids with unbranched or branched alcohols having 1 to 15 carbon atoms and olefins, vinylaromatics and vinyl halides, and
β) one or more ethylenically unsaturated carboxylic acids having 3 to 11 carbon atoms, and optionally
γ) one or more monomers containing at least two ethylenically unsaturated groups and optionally
δ) one or more further ethylenically unsaturated monomers,
with the provisos that the organopolymers b) contain at least 91% by weight of units of monomers α) and β), and that the organopolymers b) contain units of one or more monomers γ) provided that the organopolymers b) contain more than 4.9% by weight of units of the ethylenically unsaturated carboxylic acids β),
where the figures in % by weight are based in each case on the total weight of the organopolymers b), and
the coupling reagents c) are selected from the group comprising
c1) one or more alkylalkoxysilanes whose alkyl groups have at least one amino, epoxy, mercapto or isocyanate group, and
c2) one or more unsaturated alkoxysilanes and additionally one or more ethylenically unsaturated organomonomers containing at least one functional group selected from the group comprising carboxylic acid groups or derivatives thereof, sulfo groups, epoxy groups and hydroxyl groups.

2. Composite particles according to Claim 1, **characterized in that** the inorganic oxides a) used are one or more silicon oxides consisting of units of the general formula
R¹Si(OR²)_{y}O_{(4-x-y)/2} (I)
in which
x is 0, 1, 2 or 3 and y is 0, 1 or 2,
with the proviso that the sum of x+y≤3,
R¹ is an SiC-bonded monovalent hydrocarbyl radical having 1 to 18 carbon atoms,
R² is a hydrogen atom or a hydrocarbyl radical which has 1 to 18 carbon atoms and may be interrupted by one or more separate oxygen atoms, or a radical of the formula -COCH₃, -COC₂H₅ or -CH₂CH₂OH,
where the individual R¹, R² and x and y are each defined independently of one another.

3. Composite particles according to Claim 1 or 2, **characterized in that** the organopolymers b) used are polymers of vinyl esters with 1 to 15% by weight of ethylenically unsaturated carboxylic acids β) and optionally 0.1 to 5% by weight of monomers γ) and optionally 0.1 to 5% by weight of ethylenically unsaturated silanes, with the provisos that the organopolymers b) contain at least 92% by weight of units of the vinyl esters and of the ethylenically unsaturated carboxylic acids β), and that the organopolymers b) contain units of one or more monomers γ) if the organopolymers b) contain more than 4.5% by weight of ethylenically unsaturated carboxylic acids β); where the figures in % by weight add up to 100% by weight in each case.

4. Composite particles according to Claims 1 to 3, **characterized in that** the organopolymers b) used are polymers of (meth)acrylic esters with 1 to 15% by weight of ethylenically unsaturated carboxylic acids β) and optionally 0.1 to 5% by weight of monomers γ) and optionally 0.1 to 5% by weight of ethylenically unsaturated silanes, with the provisos that the organopolymers b) contain at least 92% by weight of units of the (meth)acrylic esters and of the ethylenically unsaturated carboxylic acids β), and that the organopolymers b) contain units of one or more monomers γ) if the organopolymers b) contain more than 4.5% by weight of ethylenically unsaturated carboxylic acids β); where the figures in % by weight add up to 100% by weight in each case.

5. Composite particles according to Claims 1 to 4, **characterized in that** the coupling reagents c1) used are one or more functionalized alkylalkoxysilanes of the general formula
(R²⁰)ₙSi(R³X)₄₋ₙ (II)
in which
R² is a hydrogen atom or a hydrocarbyl radical having 1 to 18 carbon atoms,
R³ is an optionally substituted alkylene radical having 1 to 20 carbon atoms, in which nonadjacent methylene units may be replaced by oxygen, and
X is bonded to R³ via a covalent bond and is an amino radical -NHR⁴, an epoxy radical -CR⁵(O)CR⁶R⁷ or an isocyanate radical -NCO, where R⁴ is a hydrogen atom or an optionally substituted alkyl, aryl or aminoalkyl radical having 1 to 10 carbon atoms,
R⁵, R⁶, R⁷ are each a hydrogen atom or an optionally substituted alkyl or aryl radical having 1 to 10 carbon atoms,
where the particular R², R³, R⁴, R⁵, R⁶ and R⁷ radicals each assume their values independently of one another, and
where R³X is bonded to the silicon atom of the formula II via a carbon atom of the R³ radical.

6. Composite particles according to Claims 1 to 5, **characterized in that** the unsaturated alkoxysilanes used for the coupling reagents c2) are one or more compounds of the general formula R⁸SiR⁹₀₋₂(OR¹⁰)₁₋₃ where R⁹ is a C₁- to C₃-alkyl radical, C₁- to C₃-alkoxy radical or halogen, R⁸ is defined as CH₂=CR¹¹- (CH₂)₀₋₁ or CH₂=CR¹¹CO₂(CH₂)₁₋₃, R¹⁰ is an unbranched or branched optionally substituted alkyl radical having 1 to 12 carbon atoms or an acyl radical having 2 to 12 carbon atoms, where R¹⁰ may optionally be interrupted by an ether group, and R¹¹ is H or CH₃.

7. Composite particles according to Claims 1 to 6, **characterized in that** the ethylenically unsaturated organomonomers used for the coupling reagents c2) are ethylenically unsaturated mono- and dicarboxylic acids, ethylenically unsaturated carboxamides or carbonitriles, mono- or diesters of fumaric acid or maleic acid, ethylenically unsaturated sulfonic acids or salts thereof, ethylenically unsaturated epoxides or ethylenically unsaturated hydroxyl compounds.

8. Process for producing the composite particles according to Claims 1 to 7, by means of conversion of a) one or more oxide particles, b) one or more organopolymers and c) one or more coupling reagents.

9. Use of the composite particles according to Claims 1 to 7 as a binder, cobinder or additive for powder coatings, coating compositions, adhesives, or in formulations for polymer or composite materials.

10. Use of the composite particles according to Claims 1 to 7 for surface treatment of synthetic or natural materials such as stone, wood, leather, paper, textiles or plastics.

## Revendications

1. Particules composites pouvant être obtenues par transformation de a) un ou plusieurs oxydes inorganiques (particules d'oxyde) présentant un diamètre moyen < 1000 nm, de b) un ou plusieurs organopolymères et de c) un ou plusieurs réactifs de couplage, les particules d'oxyde a) et les organopolymères b) étant liés via des unités des réactifs de couplage c), **caractérisées en ce qu'**on utilise, comme organopolymères b), un ou plusieurs polymères
α) d'un ou de plusieurs monomères éthyléniquement insaturés, choisis dans le groupe comprenant les esters vinyliques d'acides carboxyliques comprenant 1 à 15 atomes de carbone, les esters de l'acide méthacrylique ou acrylique d'acides carboxyliques et d'alcools non ramifiés ou ramifiés, comprenant 1 à 15 atomes de carbone, et les oléfines, les aromatiques de vinyle et les halogénures de vinyle,
ß) d'un ou de plusieurs acides carboxyliques éthyléniquement insaturés comprenant 3 à 11 atomes de carbone, et le cas échéant
γ) d'un ou de plusieurs monomères contenant au moins deux groupes éthyléniquement insaturés et le cas échéant
δ) d'un ou de plusieurs autres monomères éthyléniquement insaturés,
à condition que les organopolymères b) contiennent au moins 91% en poids d'unités des monomères α) et ß), et que les organopolymères b) contiennent des unités d'un ou de plusieurs monomères γ), pour autant que les organopolymères b) contiennent plus de 4,9% en poids d'unités des acides carboxyliques éthyléniquement insaturés ß),
les indications en % en poids se rapportant à chaque fois au poids total des organopolymères b) et
les réactifs de couplage c) étant choisis dans le groupe comprenant
c1) un ou plusieurs alkylalcoxysilanes, dont les groupes alkyle présentent au moins un groupe amino, époxy, mercapto ou isocyanate, et
c2) un ou plusieurs alcoxysilanes insaturés et en outre un ou plusieurs organomonomères éthyléniquement insaturés, contenant au moins un groupe fonctionnel choisi dans le groupe comprenant les groupes acide carboxylique ou leurs dérivés, les groupes acide sulfonique, les groupes époxy et les groupes hydroxy.

2. Particules composites selon la revendication 1, **caractérisées en ce qu'**on utilise comme oxydes inorganiques a) un ou plusieurs oxydes de silicium constitués par des unités de formule générale
R¹ₓSi(OR²)_{y}O_{(4-x-y)/2} (I)
où
x vaut 0, 1, 2 ou 3 et y vaut 0, 1 ou 2,
à condition que la somme x + y ≤ 3,
R¹ signifie un radical hydrocarboné monovalent lié par SiC, comprenant 1 à 18 atomes de carbone,
R² signifie un atome d'hydrogène ou un radical hydrocarboné comprenant 1 à 18 atomes de carbone qui peut être interrompu par un ou plusieurs atomes d'oxygène séparés les uns des autres, ou un radical de formule -COCH₃, -COC₂H₅ ou -CH₂CH₂OH,
les différents radicaux R¹, R² ainsi que x et y présentant à chaque fois leur signification indépendamment l'un de l'autre.

3. Particules composites selon la revendication 1 ou 2, **caractérisées en ce qu'**on utilise comme organopolymères b) des polymères d'esters de vinyle comprenant 1 à 15% en poids d'acides carboxyliques éthyléniquement insaturés ß) et, le cas échéant, 0,1 à 5% en poids de monomères γ) et le cas échéant 0,1 à 5% en poids de silanes éthyléniquement insaturés, à condition que les organopolymères b) contiennent au moins 92% en poids d'unités des esters de vinyle et des acides carboxyliques éthyléniquement insaturés ß), et que les organopolymères b) contiennent des unités d'un ou de plusieurs monomères γ), au cas où les organopolymères b) contiennent plus de 4,5% en poids d'acides carboxyliques éthyléniquement insaturés ß) ; les indications en % en poids s'ajoutant à chaque fois à 100% en poids.

4. Particules composites selon la revendication 1 à 3, **caractérisées en ce qu'**on utilise comme organopolymères b) des polymères d'esters de l'acide (méth)acrylique comprenant 1 à 15% en poids d'acides carboxyliques éthyléniquement insaturés ß) et, le cas échéant, 0,1 à 5% en poids de monomères γ) et le cas échéant 0,1 à 5% en poids de silanes éthyléniquement insaturés, à condition que les organopolymères b) contiennent au moins 92% en poids d'unités des esters de l'acide (méth)acrylique et des acides carboxyliques éthyléniquement insaturés ß), et que les organopolymères b) contiennent des unités d'un ou de plusieurs monomères γ), au cas où les organopolymères b) contiennent plus de 4,5% en poids d'acides carboxyliques éthyléniquement insaturés ß) ; les indications en % en poids s'ajoutant à chaque fois à 100% en poids.

5. Particules composites selon la revendication 1 à 4, **caractérisées en ce qu'**on utilise comme réactifs de couplage c1) un ou plusieurs alkylalcoxysilanes fonctionnalisés de formule générale
(R²O)ₙSi(R³X)₄₋ₙ (II)
où
R² signifie un atome d'hydrogène ou un radical hydrocarboné comprenant 1 à 18 atomes de carbone,
R³ signifie un radical alkylène le cas échéant substitué, comprenant 1 à 20 atomes de carbone, dans lequel des unités méthylène non adjacentes peuvent être remplacées par oxygène, et
X est lié via une liaison covalente à R³ et représente un radical amino -NHR⁴, un radical époxy -CR⁵(O)CR⁶R⁷ ou radical isocyanate -NCO, où
R⁴ signifie un atome d'hydrogène ou un radical alkyle, aryle ou aminoalkyle le cas échéant substitué comprenant 1 à 10 atomes de carbone,
R⁵, R⁶, R⁷ signifient un atome d'hydrogène ou un radical alkyle ou aryle le cas échéant substitué comprenant 1 à 10 atomes de carbone,
où les différents radicaux R², R³, R⁴, R⁵, R⁶ et R⁷ prennent leurs valeurs à chaque fois indépendamment les uns des autres, et
où R³X est lié via un atome de carbone du radical R³ à l'atome de silicium de la formule II.

6. Particules composites selon la revendication 1 à 5, **caractérisées en ce qu'**on utilise, pour les réactifs de couplage c2), comme alcoxysilanes insaturés, un ou plusieurs composés de formule générale R⁸SiR⁹₀₋₂(OR¹⁰)₁₋₃, où
R⁹ représente un radical C₁-C₃-alkyle, un radical C₁-C₃-alcoxy ou halogène, R⁸ signifie CH₂=CR¹¹-(CH₂)₀₋₁ ou CH₂=CR¹¹CO₂(CH₂)₁₋₃, R¹⁰ représente un radical alkyle non ramifié ou ramifié, le cas échéant substitué, comprenant 1 à 12 atomes de carbone ou un radical acyle comprenant 2 à 12 atomes de carbone, où R¹⁰ peut le cas échéant être interrompu par un groupe éther et R¹¹ représente H ou CH₃.

7. Particules composites selon la revendication 1 à 6, **caractérisées en ce qu'**on utilise, pour les réactifs de couplage c2), comme organomonomères éthyléniquement insaturés, des acides monocarboxyliques et dicarboxyliques éthyléniquement insaturés, des amides ou des nitriles d'acides carboxyliques éthyléniquement insaturés, des monoesters ou des diesters de l'acide fumarique ou de l'acide maléique, des acides sulfoniques éthyléniquement insaturés ou leurs sels, des époxydes éthyléniquement insaturés ou des composés hydroxy éthyléniquement insaturés.

8. Procédé pour la production des particules composites selon la revendication 1 à 7, par transformation de a) une ou plusieurs particules d'oxyde, de b) un ou plusieurs organopolymères, et de c) un ou plusieurs réactifs de couplage.

9. Utilisation des particules composites selon la revendication 1 à 7 comme liant, co-liant ou additif pour des laques en poudre, des agents de revêtement, des adhésifs ou dans des formulations pour des matériaux synthétiques ou des composites.

10. Utilisation des particules composites selon la revendication 1 à 7 pour le traitement de surface de matériaux synthétiques ou naturels, tels que la pierre, le bois, le cuir, le papier, les textiles ou les matériaux synthétiques.
